# EUROPEAN PATENT APPLICATION

(11) **EP 3 364 157 A1**
(43) Date of publication of application: **22.08.2018**
(21) Application number: 17382074.7
(22) Date of filing: 16.02.2017
(51) Int. Cl.: G01D 4/00

(54) **METHOD AND SYSTEM OF OUTLIER DETECTION IN ENERGY METERING DATA**

(71) Applicant: Fundación Tecnalia Research & Innovation, 48160 Derio - Bizkaia (ES)
(72) Inventor: VILLAR RODRÍGUEZ, Esther, 48160 Derio - Bizkaia (ES); DEL SER LORENTE, Javier, 48160 Derio - Bizkaia (ES)
(74) Representative: Balder IP Law, S.L.

(57) **Abstract**

An outlier detection technique is disclosed, which combines agglomerative hierarchic clustering with dynamic time warped distance computation, providing a robust and efficient detection of unusual or fraudulent behaviour. A set of training energy metering traces (X) is used to define a plurality of clusters (C) and train an outlier detection model for each cluster. Then, for each energy metering trace under test (x), the closest cluster (c) is computed, and the trained model is applied. Preferably, boxplot encoding may be applied to both the training energy metering traces (X) and the at least one trace under test (x).

## Description

### FIELD OF THE INVENTION

The present invention has its application within the energy distribution sector, especially, in the industrial area engaged in managing smart electric or gas power meters.

### BACKGROUND OF THE INVENTION

In the last years, smart energy meters have been steadily developed and installed in commercial and residential buildings. Unlike classical devices, smart meters provide more detailed information regarding data consumption and/or provision, usually storing time-resolved information. This information enables a greater insight into user habits and building operation, for example facilitating the implementation of energy saving policies. Furthermore, smart meters can store particular information regarding the users or the connected devices that may later be helpful for data analysis. Finally, smart meters typically comprise connection capabilities, enabling automatic readout and configuration from a remote application controlled by the energy provider. Therefore, dedicated on-site personnel is no longer required, also enabling faster diagnosis and access to information.

For example, US 7,693,670 B2 discloses a smart energy meter which automatically decomposes a global energy consumption into separate traces associated with individual devices coupled to the power meter, based on a Bayesian inference algorithm. The device also comprises wired and/or wireless communication interfaces for configuration and readout. In a second example, US 6,847,300 B2 discloses a smart electric power meter which incorporates a thermometer and an actuator capable of limiting or switching off electric power when a temperature threshold is exceeded.

As a consequence of smart energy metering market expansion, both opportunities and challenges arise. For example, there is a risk of users tampering with their metering devices in order to mask their actual energy consumption. Analysis of time-resolved metering data may show evidences or hints of fraudulent behaviour, but automatizing this analysis becomes computationally challenging when diverse users present different energy power consumption schedules and profiles. This same problem arises when trying to detect faulty meters that may be wrongfully charging the user due to a technical problem. Or even when trying to detect users with unusual consumption behaviours that could benefit from specific energy contracts. Ultimately, these three issues can be reduced to an outlier detection problem with the specific characteristics of energy metering data.

For example, "Evaluating Electricity Theft Detectors in Smart Grid Networks" (Daisuke Mashima and Alvaro A. Cárdenas, D. Balzarotti, S. Stolfo, and M. Cova (Eds.): RAID 2012, LNCS 7462, pp. 210-229, Springer-Verlag Berlin Heidelberg 2012), discloses an automatized outlier detection algorithm, based on adversarial classification metrics. Alarms provided by this method may be combined with physical tampering alarms, balance meters, and field personnel reports in order to detect electricity thefts. Further information, such as cross-correlations between nearby users, weather and temperature may also be integrated in the outlier detection algorithm.

In a second example, "Classification of Energy Consumption in Buildings With Outlier Detection" (Xiaoli Li, Chris P. Bowers, and Thorsten Schnier, IEEE transactions on industrial electronics, vol. 57, no. 11, November 2010) discloses an outlier detection algorithm in smart energy metering based on feature extraction and data clustering. The method combines statistical and autoregressive models to isolate abnormal data points in the training sets. Then, canonical variate analysis (CVA) and linear discriminate analysis (LDA) are used to build the classification model.

However, all the aforementioned methods present significant limitations in their capability of recognizing different valid behaviours within a same group of data. That is, their training algorithms don't properly adapt when there is limited likeness between inliers, due for example to occupancy schedule changes, diverse building purposing, changing weather conditions, etc. This leads to a high amount of false positives, false negatives or both. Therefore, there is still the need in the state of the art for an outlier detection technique effectively adapted to energy metering data, with a robust and reliable response to varying schedules and user behaviours.

### SUMMARY OF THE INVENTION

The current invention solves the aforementioned problems by providing an outlier detection technique for energy metering data, which combines agglomerative hierarchic clustering with dynamic time warped distance computation. This approach provides a more robust and efficient outlier detection, capable of automatically adapting to a wide variety of user behaviours, changes in schedules, environmental conditions, or any other external factor that may affect energy consumption.

In a first aspect of the present invention, a method for outlier detection in energy metering data is disclosed, comprising two main stages: training and analysis. According to preferred options of the invention, the energy metering data may comprise energy consumption and/or provision information; as well as any auxiliary classification information that may be incorporated to the clustering process in order to classify different types of users, devices or scenarios. In the training stage, a plurality of training energy metering traces are retrieved and processed according to the following steps:
i. Preferably, automatically removing any defective trace from the training set, such as incomplete traces or traces where hardware or software errors in the metering devices were notified.
ii. Also preferably, normalizing the retrieved training traces. Notice that any posterior training and/or analysis step may be applied to either the normalized data or to the data as retrieved, according to particular embodiments of the invention.
iii. Computing first dynamic time warped (DTW) distances among the training traces.
iv. In a preferred option, the training traces are encoded according to statistical parameters such as boxplot parameters. Notice that any posterior training, clustering and/or analysis step may be applied to either the encoded data or to the data as retrieved, according to particular embodiments of the invention.
v. Clustering the training traces into a plurality of clusters according to the first computed DTW distances. Clusters are computed according to an agglomerative hierarchical clustering algorithm, with the number of clusters being preferably set through an elbow method.
vi. Training an outlier detection model for each cluster. Preferably, this training can be performed either based on least-square-based kernel density estimation (LS) or on local outlier factor (LOF) metrics. Furthermore, in order to train the outlier detection models, the method preferably comprises emulating outliers by applying randomized modification to a subset of the training traces. These modifications may include, for example, amplitude and speed variations, phase shifts, etc.

Secondly, the analysis stage determines whether a retrieved energy metering trace, corresponding to energy consumption and/or provision recorded at a metering device corresponds to regular behaviour or exhibits unusual characteristics. The analysis stage can be performed either on a single trace, or more typically, on a plurality of traces which are retrieved and processed in parallel. In both cases, the following steps are performed:
i. Preferably, each trace under test is normalized and/or encoded, depending on whether these processes were applied to the training data set in that particular embodiment.
ii. For each trace under test, a second DTW distance between the trace and each of the previously computed clusters is computed. Then, the cluster with the smallest second distance is selected as the closest cluster.
iii. Finally, the trace under test is compared to the outlier detection model previously trained for the cluster determined to be the closest. A final result indicating if the trace under analysis is an outlier is hence provided. This result may then be stored in a memory, transmitted to a remote server or device through a communication link or network, or shown to a user through a user interface. Notice that when multiple traces are analysed simultaneously, each of the traces is individually compared to the model of the cluster closest to that particular place.

In a second aspect of the present invention, a system for outlier detection in energy metering data is presented. The system comprises the following main modules:
- Communication means, which retrieve a plurality of training energy metering traces and at least an energy metering trace under test. Depending on preferred embodiments of the system, the communication means may be adapted to either connect directly to a smart metering device in order to retrieve the aforementioned data, to connect to an energy metering database, or both. Likewise, the energy metering database may be stored locally in a memory or remotely in a server. The communication means may hence be adapted to each of these scenarios, implementing any communication protocol known in the state of the art which is suitable for that particular scenario. Notice that the communication means not only retrieve data, but are also preferably adapted to store or transmit the final results indicating whether the at least one trace under test is an outlier. Also notice that the system may comprise multiple communication means adapted to be connected to multiple elements.
- Clustering means, which classify the training traces into a plurality of clusters according to the DTW distance between said traces, using an agglomerative hierarchical clustering algorithm. In the analysis stage (also referred to as test stage), the clustering means also compare any trace under test with the aforementioned clusters, determining the closest one according to DTW metrics.
- Outlier detection means, which train an outlier detection model for each of the clusters classified by the clustering means. Also, in the analysis stage, the outlier detection means apply the trained model of the closest cluster of each trace under test, and determine whether said trace under test is an outlier.

Finally, in a third aspect of the present invention, a computer program is disclosed which implements the method of the invention, therefore controlling the system of the invention and processing the involved data. The computer program comprises computer program code means adapted to perform any embodiment of the method of the invention when run on a computer, a digital signal processor, a field-programmable gate array, an application-specific integrated circuit, a micro-processor, a micro-controller, or any other form of programmable hardware.

Notice that any preferred option and particular embodiment of the system of the invention can be applied to the method and computer program of the invention. Likewise, any preferred option and particular implementation of the method and computer program of the invention can be implemented by logical means of the system of the invention.

With the method, system and computer program of the invention, robust and efficient outlier detection is achieved, being able to accurately classify data comprising a large disparity of user behaviours and schedules. The provided outlier detection can be applied to diverse purposes such as data tampering, electronic failure detection, behaviour changes that may affect commercial actions, early detection of stability and management problems in the energy network, etc. Additional advantages and features of the invention will become apparent from the detailed description that follows and will be particularly pointed out in the appended claims.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 shows schematically the main processing blocks of a particular embodiment of the invention, as well as their inputs and outputs.
Figure 2 illustrates a schematic example of the result of data clustering and outlier detection, according to a particular embodiment of the invention.
Figure 3 is a first flow chart depicting the main training steps of the method of the invention, according to a particular embodiment thereof.
Figure 4 is a second flow chart depicting the main analysis steps of the method of the invention, according to a particular embodiment thereof.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope of the invention. In particular, note that any particular embodiment or feature of the device of the invention may be applied to the method of the invention and vice versa. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

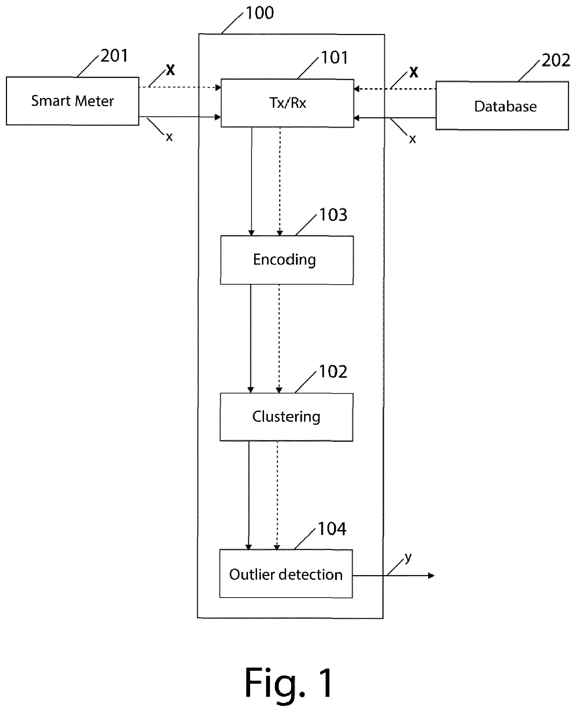

Figure 1 shows schematically a preferred embodiment of the system 100 of the invention, which implements the steps of a preferred embodiment of the method of the invention. The system 100 comprises four main logical blocks, namely communication means 101, clustering means 102, encoding means 103 and outlier detection means 104. Communications means 101 is implemented for example as a transmitter/receiver unit. Communications means can be adapted to connect directly or indirectly to a smart meter 201, to a database 202 storing smart meter information, or both. The type of connection between the communications means 101 and the smart meter 201 and/or the database 202 is out of the scope of the present invention. Notice that the database 202 may be an internal database, that is, a memory in the same physical device as the outlier detection system 100; or an external database, implemented in a server. In all the aforementioned scenarios, communication means 104 may implement any wired or wireless protocols for transmission/reception known in the state of the art, suitable for the automated data retrieval of the invention. The clustering means 102, encoding means 103 and outlier detection means 104 are embodied in any computing means, such as a processor, which is out of the scope of the present invention.

The system 100 is adapted to retrieve a plurality of training traces (X) comprising historic energy metering information, such as time-resolved electric energy consumption and/or generation, which is used to compute a plurality of clusters (C) and train a specific outlier detection model for each cluster. Clusters (C) are computed according to an agglomerative hierarchical algorithm based on DTW distances. After the training stage, the system is adapted to retrieve a plurality of traces under test (x), comprising the same time-resolved information as the training traces (X). Traces under test (x) can either be retrieved in real time or in batches with off-line operation. In both cases, the traces under test (x) are processed by the clustering means 102, encoding means 103 and previously trained outlier detection means 104 in order to determine whether each trace under test (x) corresponds to an outlier (y).

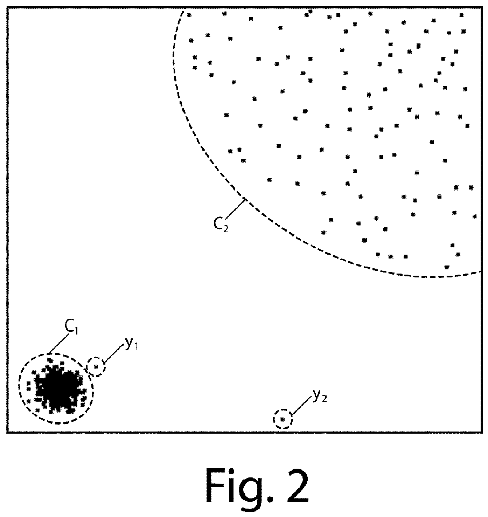

Figure 2 shows a schematic representation of training traces (X) and/or traces under test (x), where each trace is represented by a single dot, and the distance between two dots is proportional to the DTW distance between the traces. Two clusters (C₁ and C₂ in figure 2) are represented, comprising elements with similar behaviours according to DTW metrics. Outside said clusters, two outliers (y₁ and y₂) are represented. Notice that the elements of each cluster may be related through different distances, and therefore, different thresholds may apply when determining whether a particular trace corresponds to an outlier.

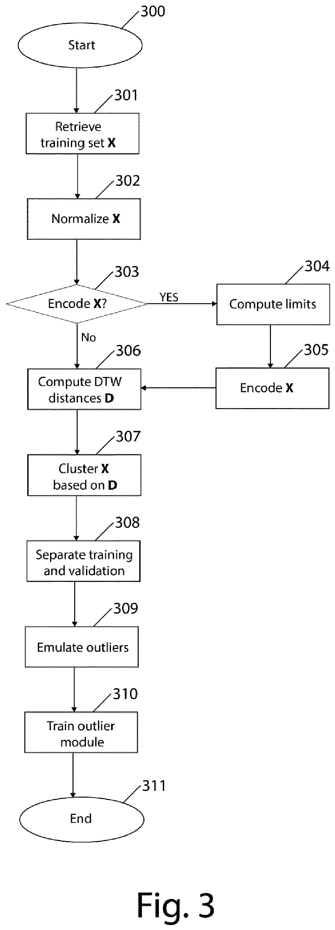

Figure 3 is a flow chart further detailing the training stage of a particular embodiment of the method of the invention, which is implemented by a particular embodiment of the system of the invention. The method starts 300 by retrieving 301 the training set X and normalizing 302 each trace. Each trace comprises energy consumption and/or generation information from a single smart metering device for a certain period of time, typically a day, and with a certain temporal resolution, typically an hour. Normalization is preferably performed by subtracting the arithmetic mean of each trace and dividing by the standard deviation of that trace. Defective traces may also be automatically removed to cleanse the data set.

Then, optionally, it is decided 303 whether boxplot encoding applies, according to user configuration or any other applicable rule integrated in the algorithm. If affirmative, boxplot limits are computed 304 and the training set X is encoded 305 according to the boxplot parameters of each trace. After encoding, DTW distances D between encoded elements of X are computed 306. Otherwise, encoding can be skipped, and DTW distances between elements of X are computed 306 directly on the data as retrieved. Boxplot encoding improves the method performance given the inherent variability of the training traces, but is nevertheless optional.

DTW metrics determine the likeness between two signals that may present speed changes. That is, the distance is measured after an optimization process performed on the matching between two signals which may present phase shifts, speed compressions and/or speed expansions. Although more time-consuming than other traditional distance metrics, such as Euclidean distances, DTW advantageously adapts to changing user schedules in different days or seasons, providing a more robust, reliable and adaptable outlier detection. That is, a conventional method would detect as outlier a day in which a user arrives at home particularly late for a given circumstance but then behaves as usual. Thanks to the use of DTW metrics, the invention properly classifies this behaviour. Furthermore, the combination of DTW metrics and boxplot encoding further accommodates changes both in time and amplitude (that is, energy amount), working synergistically for a more robust clustering.

After DTW distance computation, the elements of X are clustered 307 according to the computed DTW distances between them. The clustering process is performed through an agglomerative hierarchical algorithm, with the number of clusters being decided through an elbow algorithm. Nevertheless, in particular embodiments of the invention, additional auxiliary classification information retrieved from the smart meter 201 may be weighed and used along the DTW distances to perform the hierarchical clustering, such as user information, contract information, configuration information, geographical localization, metering device characteristics, transformation centre information, etc.

Hierarchical clustering circumvents the need of centroid calculation, challenging in DTW metrics. In particular, agglomerative (also known as ascending) hierarchical clustering starts with as many clusters as individuals (an individual being a single data trace in this particular scenario. Then, an iterative process occurs, forming hierarchical groups until all the individuals are encompassed in a single group. In each iteration, it is considered that the distance between two groups is the largest distance between individuals of said groups. The number of groups is then selected through an elbow method, known in the state of the art, which is based on intra-cluster variance measurements. Nevertheless, alternative hierarchical clustering, such as divisive hierarchical clustering may be used in alternative embodiments.

Once the clusters are determined, the training set X is preferably separated 308 into two group of traces. The first group (for example, a random selection of 70% of the elements of X) serves for model training purposes, while the second group (the remaining 30%) serves for validation purposes. The second group (validation group) is then used to emulate 309 outliers and behaviour modifications. In order to perform said emulation, the traces of the validation group are artificially modified, assigning to each one a binary value indicating whether that artificial modification should be considered an outlier. Some examples of implementable modifications are:
- Temporal shifts: the time-of-the-day of a trace comprising historic data is changed to earlier or later times. This should typically be regarded as an inlier.
- Random load variations: an additive random number between a minimum threshold and a maximum threshold is applied to each point of the trace. If the minimum threshold is chosen to be high enough, this should typically be regarded as an outlier.
- Zero values insertion: a number of data points are removed from each trace and substituted by zero, therefore emulating a failure or tampering of the metering device.

Nevertheless, notice that any other additional mathematical or logical alteration may be applied to the validation group in order to emulate the outliers.

An outlier detection model is then trained 310 individually for each cluster. Each cluster training comprises determining whether each trace of the training set (including emulated outliers) is an outlier, given a particular outlier detection algorithm and given a set of input parameters of said algorithm. Then, a score is computed, reflecting how accurate the result was using those parameters. That is, the score is related to the number of false positives and/or false negatives obtained, using as optimal results the ideal binary values assigned to each trace. Then, the algorithm parameters are modified in an iterative process, finally selecting those parameters that optimize the score. For example, the detection algorithm may be an LOF or an LSA algorithm, whereas the score may be the addition of true positives and true negatives relative to the total number of traces. Nevertheless, notice that other detection algorithms and/or scores known in the state of the art for outlier detection may be used. This finalizes 311 the training stage.

LOF is a distance-based anomaly detection algorithm which compares data point density to determine outliers. It enables to define a single metric for a dataset encompassing multiple regions with differentiated groups, each group having a particular density. An outlier score is hence assigned to each data point depending on nearby densities. Then, a configurable threshold is applied to the outlier score, binarizing the final result. This allows a greater behaviour variability and prevents the generation of an excessive number of alarms. A detailed explanation of a LOF algorithm applied to a different field can be found, for example, in "LOF: Identifying Density-based Local Outliers" (Breunig, M. M.; Kriegel, H.-P.; Ng, R. T.; Sander, J. (2000). Proceedings of the 2000 ACM SIGMOD International Conference on Management of Data. SIGMOD. pp. 93-104. doi:10.1145/335191.335388. ISBN 1-58113-217-4).

LS trains a model with inliers, which later provides a score which indicates the probability of a data point under test to be an outlier. As the probability is initially unknown, the algorithm approximates density with an inlier-based gaussian kernel. The method can be adjusted through parameters such as the kernel width or the minimization function regularization constant. Notice that LS involves a greater computational load than LOF. A detailed explanation of a Ls algorithm applied to a different field can be found, for example in "A Least-Squares Approach to Anomaly Detection in Static and Sequential Data" (J.A. Quinn, M. Sugiyama. Pattern Recognition Letters 40:36-40, 2014).

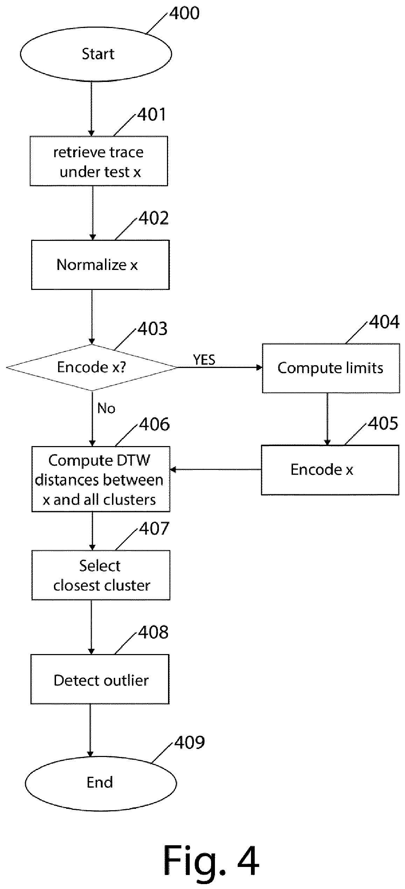

Finally, figure 4 shows a flow chart further detailing the analysis stage according to a particular embodiment of the method of the invention, which is implemented by a particular embodiment of the system of the invention. The method starts 400 by retrieving 401 the trace (or traces) under test x and normalizing 402 each trace. Said normalization should be the same as the one performed with the training set X. That is, normalization is preferably performed by subtracting the arithmetic mean of each trace and dividing by the standard deviation of that trace. Then, it is decided 403 whether boxplot encoding applies, based on whether or not it was applied in the training stage. If affirmative, boxplot limits are computed 404 and the traces under test x are encoded 405. Otherwise, encoding is skipped.

Then, DTW distances are computed 406 between each trace under test x and each of the previously computed clusters, and the closest cluster according to said DTW metric is selected 407. The closest cluster is preferably selected as the one which minimizes the mean of the DTW distances between the trace under test x and each trace of the cluster. That is, for a cluster of n elements, n DTW distances are computed and averaged. This process is repeated for each cluster, ultimately selecting the one with the lowest average. Nevertheless, particular embodiments of the invention may use other rules to define the closest cluster, such as the one encompassing the closest training trace to the data under test, or any other alternative condition based on DTW distances.

Finally, each trace under test x is applied to the previously-trained outlier detection model of its closest cluster, hence detecting 408 any outlier y. Furthermore, in particular embodiments of the invention, multiple closest clusters may be selected, performing the outlier analysis for each one individually, and defining the data as outlier only if that is true for all of the closest clusters. This finalizes 409 the analysis stage.

## Claims

1. A method of outlier detection in energy metering data which comprises retrieving (301, 401) a plurality of training energy metering traces (X) and at least one energy metering trace under test (x); **characterized in that** the method further comprises
computing (306) fist dynamic time warping distances (D) between the retrieved plurality of training energy metering traces (X);
clustering (307) the plurality of training energy metering traces (X) into a plurality of clusters (C) using a hierarchical clustering algorithm based on the first computed distances (D);
training (310) an outlier detection model for each cluster (C);
computing (406) second dynamic time warping distances (D) between the retrieved at least one energy metering trace under test (x) and the plurality of clusters (C);
selecting (407) a closest cluster (c) to the at least one trace under test (x) based on the second computed distances (D); and
detecting (408) an outlier (y) based on the outlier detection model trained for the closest cluster (c).

2. The method according to claim 1 further comprising encoding (305, 405) the plurality of training energy metering traces (X) and the at least one energy metering trace under test (x) according to statistical parameters.

3. The method according to any of the previous claims wherein the step of training (310) the outlier detection model for each cluster (C) is based on a least squares metric.

4. The method according to any claims 1 or 2, wherein the step of training (310) the outlier detection model for each cluster (C) is based on a local outlier factor metric.

5. The method according to any of the previous claims, wherein the step of clustering (307) the plurality of training energy metering traces (X) further comprises determining a number of clusters (C) using an elbow technique.

6. The method according to any of the previous claims, further comprising normalizing (302, 402) the plurality of training energy metering traces (X) and the at least one energy metering trace under test (x).

7. The method according to any of the previous claims, further comprising emulating (309) outliers by applying randomized modifications to the plurality of training energy metering traces (X).

8. The method according to any of the previous claims, further comprising automatically removing defective traces from the plurality of training energy metering traces (X).

9. The method according to any of the previous claims, wherein the plurality of training energy metering traces (X) and the at least one energy metering trace under test (x) comprise energy consumption information.

10. The method according to any of the previous claims, wherein the plurality of training energy metering traces (X) and the at least one energy metering trace under test (x) comprise energy provision information.

11. The method according to any of the previous claims, wherein the plurality of training energy metering traces (X) and the at least one energy metering trace under test (x) comprise auxiliary classification information, the plurality of training energy metering traces (X) further applying said auxiliary classification information in the step of clustering (307).

12. A system (100) of outlier detection in energy metering data comprising
communication means (101) configured to retrieve a plurality of training energy metering traces (X) and at least one energy metering trace under test (x);
clustering means (102) configured to classify the plurality of training energy metering traces (X) into a plurality of clusters (C) and to select a closest cluster (c) to the at least one energy metering trace under test (x); and
outlier detection means (103) configured to train (310) an outlier detection model for each cluster (C) and to detect an outlier (y) based on the outlier detection model trained for the closest cluster (c);
**characterized in that** the clustering means (102) are further configured to compute dynamic time warping distances (D) between the retrieved plurality of training energy metering traces (X), and to use a hierarchical clustering algorithm based on the computed distances (D).

13. The system (100) according to claim 12, wherein the communication means are further configured to automatically connect to a smart energy metering device.

14. The system (100) according to claim 12, wherein the connection means are further configured to automatically connect to an energy metering database.

15. A computer program comprising computer program code means adapted to perform the steps of the method according to any claims from 1 to 11 when said program is run on a computer, a digital signal processor, a field-programmable gate array, an application-specific integrated circuit, a micro-processor, a micro-controller, or any other form of programmable hardware.
